# EUROPEAN PATENT SPECIFICATION

(11) **EP 4 446 925 B1**
(45) Date of publication and mention of the grant of the patent: **08.04.2026**
(21) Application number: 22920179.3
(22) Date of filing: 11.01.2022
(51) Int. Cl.: G06F 21/64, G06F 21/55, G06F 21/56

(54) **DETECTION DEVICE, DETECTION METHOD, AND DETECTION PROGRAM**
DETEKTIONSVORRICHTUNG, DETEKTIONSVERFAHREN UND DETEKTIONSPROGRAMM
DISPOSITIF DE DÉTECTION, PROCÉDÉ DE DÉTECTION, ET PROGRAMME DE DÉTECTION

(43) Date of publication of application: 16.10.2024
(73) Proprietor: NTT, Inc., Tokyo 100-8116 (JP)
(72) Inventor: CHIBA, Nobuhiro, Musashino-shi, Tokyo 180-8585 (JP); TAKIGUCHI, Hiroyoshi, Musashino-shi, Tokyo 180-8585 (JP); KOYAMA, Takaaki, Musashino-shi, Tokyo 180-8585 (JP); NAKAJIMA, Yoshiaki, Musashino-shi, Tokyo 180-8585 (JP)
(74) Representative: Hoffmann Eitle
(86) International application number: PCT/JP2022/000592
(87) International publication number: WO 2023/135653

(56) References cited:
- WO-A1-2005/111809
- JP-A- 2005 346 564
- JP-A- 2016 081 154
- JP-A- 2019 082 967
- US-A- 6 021 510
- US-A1- 2007 033 235
- US-A1- 2014 297 699

## Description

### Technical Field

The present invention relates to a detection device, a detection method, and a detection program.

### Background Art

Conventionally, as a method for detecting falsification, a method using a digest value of file contents is known. For example, there is a mechanism in which, in a case where the presence or absence of falsification of the content of a file in a device is checked, a list indicating a combination of each file path in the device and a digest value of the file content is defined as a determination criterion in advance, and thereafter, when the presence or absence of falsification in the device is checked, the determination criterion is sequentially compared with the digest value of the file content in the device, and the presence or absence of falsification is checked based on the presence or absence of a difference therebetween.

In addition, as a method for detecting falsification, a method using attribute information of a file is also known in addition to a file content. For example, there is software for detecting falsification of a file on the basis of a change in the attribute information of the file.

### Citation List

### Patent Literature

Patent Literature 1: Japanese Laid-open Patent Publication No. 2019-008376 A

Patent Literature 2: US 2007/033235 A1 describes file management including storing a file and storing volume management data for managing a volume which includes the file. Volume alteration detection data are generated for detecting an alteration to the volume management data when the file is written. Data comparing means read the volume management data when the volume is mounted, read the volume-alteration detection data from the second storing means, and compare the volume management data and the volume-alteration detection data. With paragraphs [0154] and [0155] as indicated D1 refers to the creation of the file-alteration detection data when a file is written. This detection data is used to verify the integrity of file management data when the file is opened.

Patent Literature 3: D2: US 602 1510 A describes determining whether a computer virus is present within a file having a numbered sector. When the file is examined for an initial time, the file is scanned by an antivirus module. At that time, the numbers of the sectors being scanned and a hash value for each scanned sector are stored into a critical sector file. When the file is examined a subsequent time, all of the file sectors that were scanned the initial time are examined by the antivirus accelerator module. Each of these sectors again has its hash value calculated and compared with the hash value of the corresponding sector as stored within the critical sector file. When any calculated hash value fails to match a corresponding stored hash value for any sector, the antivirus scan module is commanded to rescan the entire file.

### Non Patent Literature

Non Patent Literature 1: Zero kara hajimeru Linux sekyuriti (8) Tripwire ni yoru hosuto-gata IDS no kochiku, (in Japanese) (Start Linux security from scratch (8) Building a hosted IDS with Tripwire), [online], [retrieved on January 5, 2022], the Internet <https://atmarkit.itmedia.co.jp/ait/articles/0203/19/news002_2.html>

### Summary of Invention

### Technical Problem

However, the conventional technique has a problem that falsification of a file cannot be accurately and quickly detected in some cases. For example, in the conventional method using the digest value of the file content, it is necessary to read the entire file content once in order to generate the digest value of the file content in the device when confirming the presence or absence of falsification, and in a case where there is a large file or a large number of files in the device, it takes time to read the entire file content, and it is not possible to quickly notice the falsification of the device.

In addition, in the conventional method using the attribute information of the file, there is a pattern (a pattern of rewriting contents while keeping the same file size, a pattern of falsifying a time stamp after a file content change to a time stamp before the change, and the like) in which the attribute information does not change even if the file content is falsified, and it is difficult to prevent such file falsification.

The present invention has been made in view of the above, and an object thereof is to provide a detection device, a detection method, and a detection program capable of accurately and quickly detecting falsification of a file.

### Solution to Problem

The above problems are solved and the object is achieved by the subject matter of the independent claims. Advantageous embodiments are disclosed in the dependent claims. According to an example, a detection device includes an acquisition unit configured to acquire position information and a file size of a falsification detection target file, and a detection unit configured to determine a change in the position information or the file size acquired by the acquisition unit, and detect falsification of the falsification detection target file in a case where there is a change in the position information or the file size.

### Advantageous Effects of Invention

According to the present invention, it is possible to accurately and quickly detect falsification of a file.

### Brief Description of Drawings

Fig. 1 is a block diagram illustrating a configuration of a detection device of a present embodiment.
Fig. 2 is a diagram illustrating an example of a determination criterion saved in a determination criterion memory unit.
Fig. 3 is a diagram illustrating information used for falsification detection.
Fig. 4 is a diagram illustrating position information of a storage area of a file.
Fig. 5 is a diagram illustrating a comparison between a detection time of the detection device of the present embodiment and a conventional detection time.
Fig. 6 is a diagram illustrating another example of a determination criterion.
Fig. 7 is a flowchart illustrating an example of a processing procedure of pre-processing.
Fig. 8 is a flowchart illustrating an example of a processing procedure of detection processing.
Fig. 9 is a diagram illustrating a computer that executes a program.

### Description of Embodiments

The following description will explain an embodiment of a detection device, a detection method, and a detection program according to the present application in detail with reference to the drawings. Moreover, the present invention is not limited to the embodiment described below.

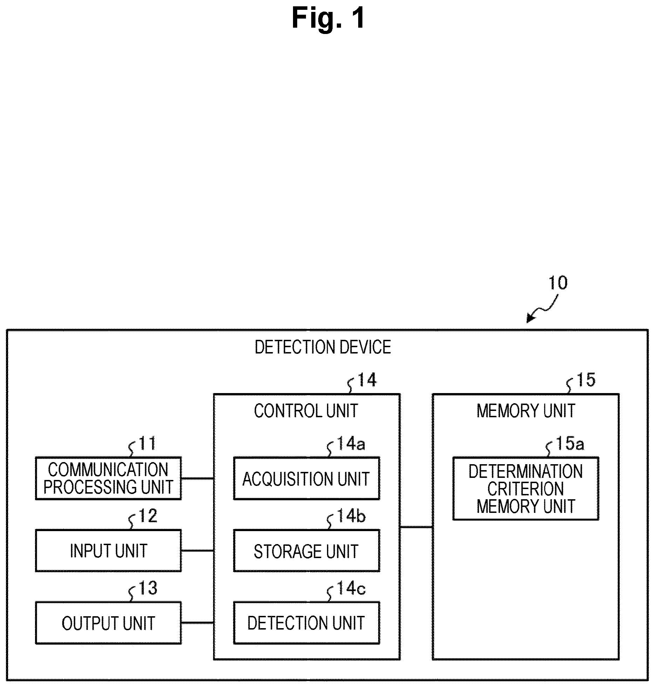

[Configuration of Detection Device] Fig. 1 is a block diagram illustrating a configuration of the detection device of the present embodiment. As illustrated in Fig. 1, a detection device 10 of the present embodiment includes a communication processing unit 11, an input unit 12, an output unit 13, a control unit 14, and a memory unit 15.

The communication processing unit 11 is realized by a network interface card (NIC) or the like, and controls communication between a target device (not illustrated) saving a falsification detection target file and the control unit 14 via a telecommunication line such as a local area network (LAN) or the Internet. For example, the communication processing unit 11 receives a set of the file path, the digest value of the file content, the position information of the file, the digest value of the position information, and the attribute information of the file from the target device.

The input unit 12 is implemented by using an input device such as a keyboard or a mouse and inputs various types of instruction information such as processing start to the control unit 14 in response to an input operation by an operator. The output unit 13 is implemented by a display device such as a liquid crystal display. For example, the output unit 13 outputs a result of falsification detection.

The memory unit 15 saves data and programs necessary for various processing procedures by the control unit 14, and includes a determination criterion memory unit 15a. For example, the memory unit 15 is a semiconductor memory element such as a random access memory (RAM) or a flash memory, or a storage device such as a hard disk or an optical disc.

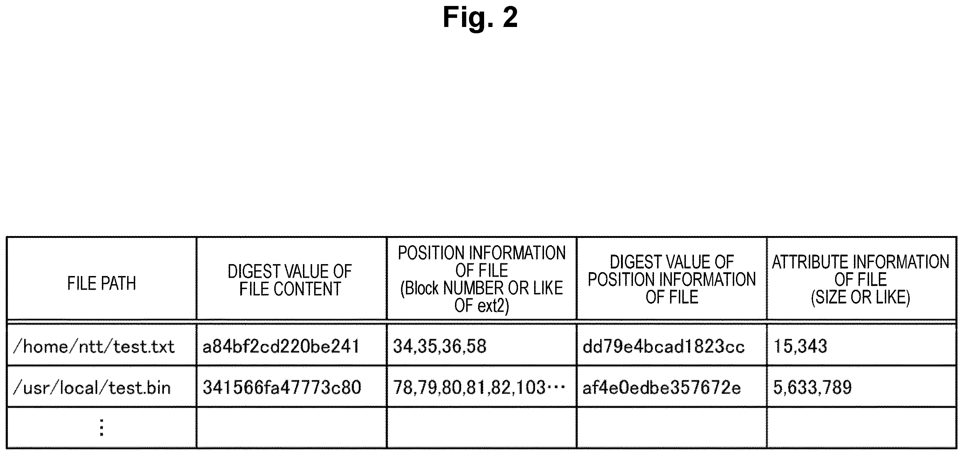

The determination criterion memory unit 15a stores a determination criterion created in advance for detecting falsification. For example, as illustrated in Fig. 2, the determination criterion memory unit 15a stores a file path, a digest value of file contents, file position information, a digest value of file position information, and file attribute information as determination criteria. Fig. 2 is a diagram illustrating an example of a determination criterion saved in a determination criterion memory unit.

The control unit 14 includes an internal memory for storing a program defining various processing procedures and the like and required data, and executes various types of processing using the program and the data. For example, the control unit 14 includes an acquisition unit 14a, a storage unit 14b, and a detection unit 14c. Here, the control unit 14 is an electronic circuit such as a central processing unit (CPU) or a micro processing unit (MPU), or an integrated circuit such as an application specific integrated circuit (ASIC) or a field programmable gate array (FPGA).

The acquisition unit 14a acquires position information and a file size of a falsification detection target file. The acquisition unit 14a may acquire the digest value of the file position information instead of the file position information, or may acquire the digest value of the file position information together with the file position information. For example, the acquisition unit 14a acquires a digest value of position information and a file size of a falsification detection target file.

For example, the acquisition unit 14a acquires the position information and the file size of the falsification detection target file when the determination criterion is generated and when the falsification detection is performed as the acquisition timing.

For example, when the determination criterion is generated, the acquisition unit 14a acquires a set of a file path, a digest value of a file content, file position information, a digest value of position information, and file attribute information of the file for a falsification detection target file with from the target device.

In addition, when falsification is detected, the acquisition unit 14a acquires the position information and the file size of the falsification detection target file from the target device. Note that the acquisition unit 14a may acquire a set of the file path, the digest value of the file content, the file position information, the digest value of the position information, and the attribute information of the file for the falsification detection target file from the target device when the falsification is detected.

The storage unit 14b generates a determination criterion including the position information or the file size acquired by the acquisition unit 14a, and stores the determination criterion in the determination criterion memory unit 15a. For example, the storage unit 14b generates a set of a file path, a digest value of a file content, file position information, a digest value of the position information, and file attribute information as a determination criterion, and stores the set in the determination criterion memory unit 15a.

Then, the detection unit 14c determines a change in the position information or file size acquired by the acquisition unit 14a, and in a case where there is a change in the position information or file size, detects falsification of the falsification detection target file. In addition, the detection unit 14c may determine a change in the digest value or the file size of the position information acquired by the acquisition unit 14a, and in a case where there is a change in the digest value or the file size of the position information, may detect falsification of the falsification detection target file.

For example, the detection unit 14c compares the position information and the file size included in the determination criterion saved in the determination criterion memory unit 15a with the position information and the file size acquired at the time of performing the falsification detection, and detects, in a case where any of the position information and the file size does not match, the falsification of the falsification detection target file assuming that there is a change in the position information or the file size.

Note that the detection unit 14c may further detect falsification using a digest value of the file content. For example, the detection unit 14c may further determine, in a case where there is a change in the position information or the file size, whether there is a change in a digest value of the file content, and in a case where there is a change in the digest value of the file content, detects falsification of a falsification detection target file. More specifically, for example, in a case of checking whether the file of the target device has been falsified, the detection unit 14c compares the file path within the determination criterion, the position information of the file (or the digest value of the position information), the attribute information of the file, and each piece of information in the device, and checks whether or not there is a mismatch. Then, if there is no mismatch, the detection unit 14c determines that the device is not falsified, and ends the confirmation. If there is a mismatch, the detection unit 14c compares the digest value of the file content within the determination criterion of the file path with the digest value of the file in the device, and determines, if there is a mismatch, that the content of the file is falsified.

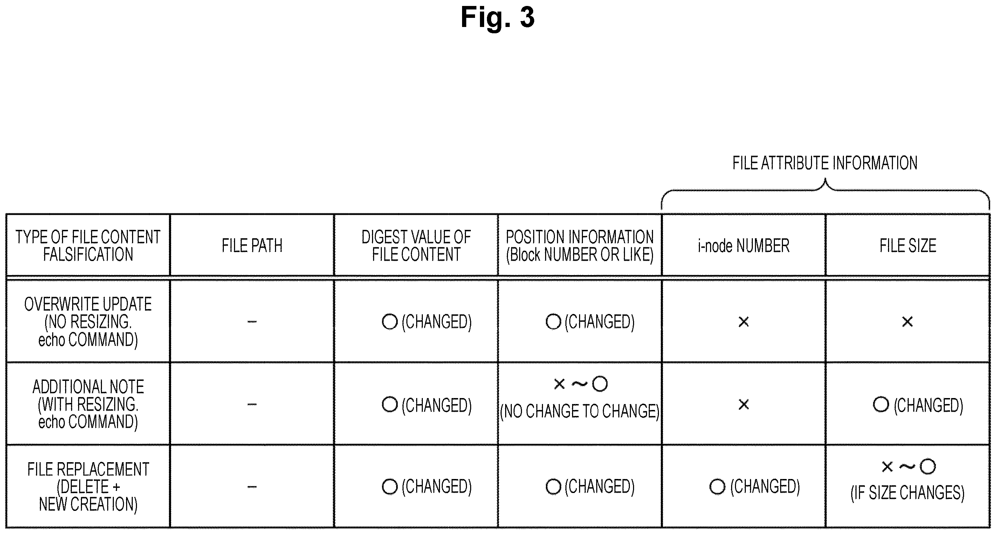

Here, information used for falsification detection will be described with reference to Fig. 3. Fig. 3 is a diagram illustrating information used for falsification detection. As illustrated in Fig. 3, examples of the type of file content falsification include "overwrite update", "additional note", and "file replacement". In the example of Fig. 3, in the case of the overwrite update, since the file attribute information (i-node number and file size) does not change, the detection unit 14c cannot detect the falsification of the file content only by the file attribute information, but can detect the falsification by the position information. Note that, in the case of the additional note and in the case of the additional note with a small size, the detection unit 14c cannot detect falsification based only on the position information because the position information does not change. However, the detection unit 14c can detect falsification by combining the file size of the file attribute information.

As described above, the detection unit 14c detects that the file content is falsified by combining the position information of the storage area of the file on the file system and the file size as a method of detecting file falsification. For example, in a file system such as ext2 of Linux (registered trademark), a storage area is managed in units of blocks, and corresponds to a data block number. In addition, in the case of a file system of Windows (registered trademark), it corresponds to a cluster number. The Block number indicates a position on the storage medium, and the entire file is read by following a plurality of block numbers associated with the file. That is, the Block number is an address on the storage, and it is difficult for the user to easily change the block number.

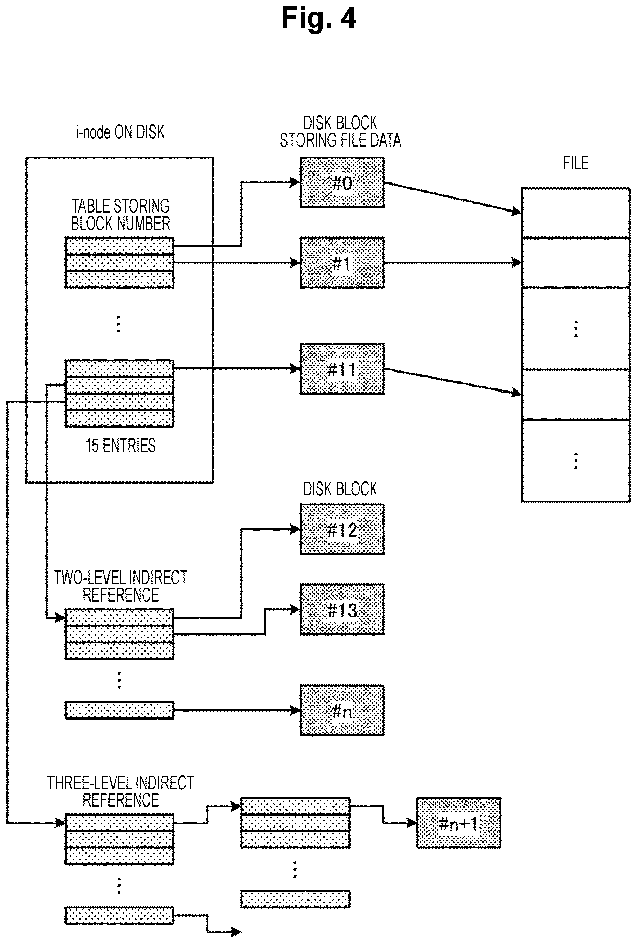

Here, the position information of the storage area of the file will be described with reference to Fig. 4. Fig. 4 is a diagram illustrating position information of the storage area of the file. A Block is a minimum unit (corresponding to a cluster in a case of a file allocation table (FAT)) for storing data used in an ext-based file system. As illustrated in Fig. 4, one file includes a plurality of Blocks and is managed by a table of an i-node. In addition, for example, when the file content is rewritten, the content is written in another block, and the correspondence relationship between the file and the Block is updated.

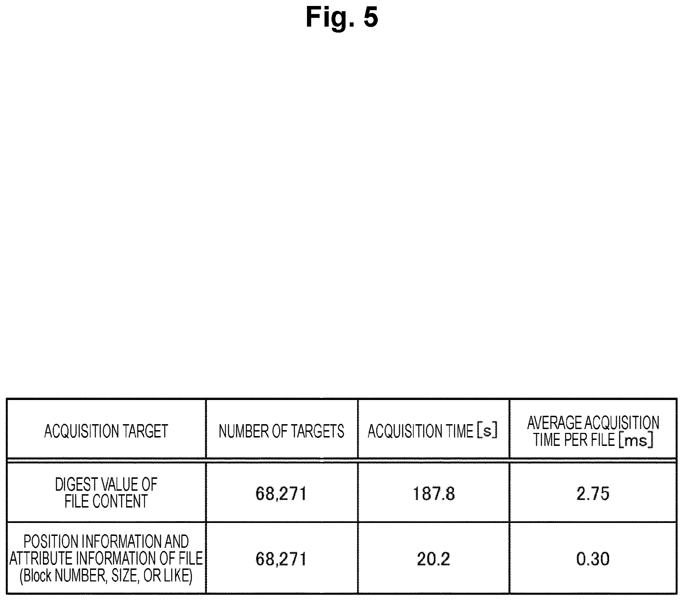

As described above, since the detection device 10 detects the falsification of the file using the position information (block number or the like) of the storage area of the file together with the attribute information of the file, it is possible to quickly and accurately detect the falsification of the file. In addition, as illustrated in Fig. 5, according to the result of measurement in the verification environment, the detection device 10 can significantly shorten the average detection time per file by acquiring the position information (block number or the like) and the file attribute information as compared with the digest value of the file content. That is, the acquisition of the position information and the attribute information of the file can be performed at a much higher speed than the acquisition of the digest value of the file content, and the undetectable time can be shortened.

Normally, in order to confirm whether the contents of the files in the device have been falsified, the contents of the files in the device are sequentially read and compared with the original contents to confirm whether the contents have not been changed. However, in particular, in a case where there is a large file or a large number of files, reading all the contents of the files can be strictly checked, but it takes time. The detection device 10 reads, instead of the content of the file, the position information of the storage area of the file on the file system and the file size, compares the position information and the file size with the original position information and file size, and confirms whether the file has not been changed. Here, only for a file whose position information and file size have been changed, the content of the file is read and compared with the original content, whereby the amount and frequency of reading the file content can be reduced, and falsification of the device can be quickly detected. Note that the position information and the attribute information of the file are generally very small compared to the size of the file itself, and it takes only a short time to acquire the file.

In addition, since there is a pattern in which the attribute information does not change even if the file content is falsified only with the attribute information, the detection device 10 can more correctly detect that the file has been falsified by checking not only the attribute information but also the information of the position information of the storage area of the file in combination.

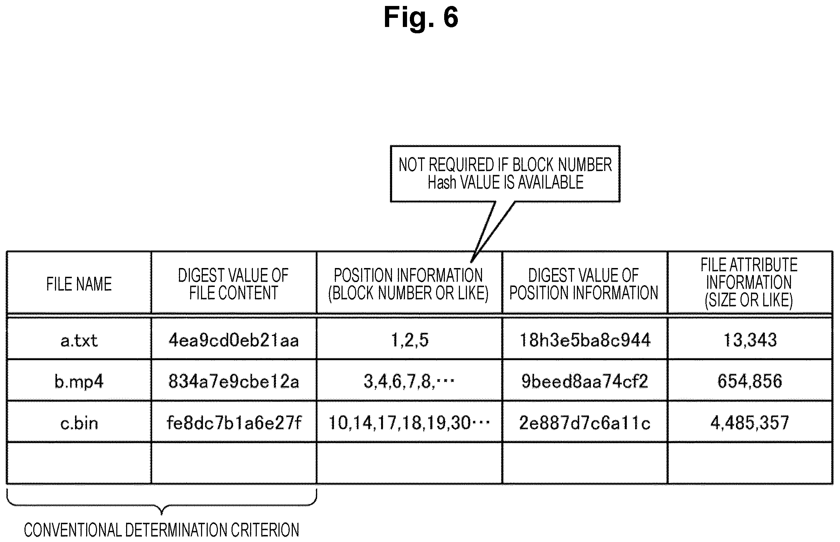

Note that examples of the determination criteria are not limited to those illustrated in Fig. 2. For example, as illustrated in Fig. 6, if there is a digest value of the block number (digest value of the position information), the block number that is the position information is unnecessary. Fig. 6 is a diagram illustrating another example of the determination criterion.

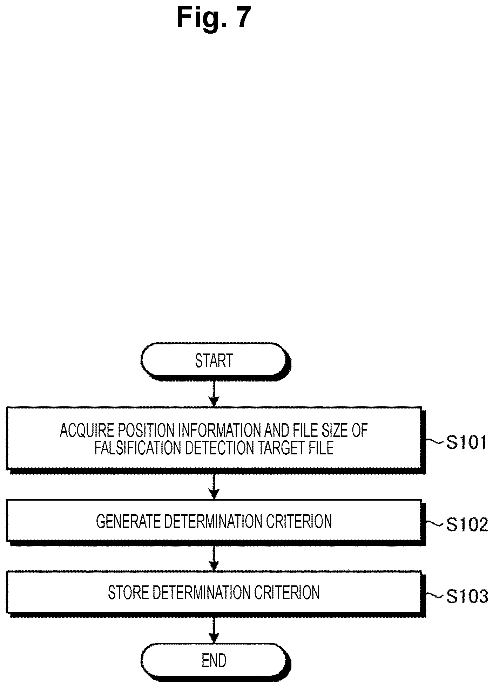

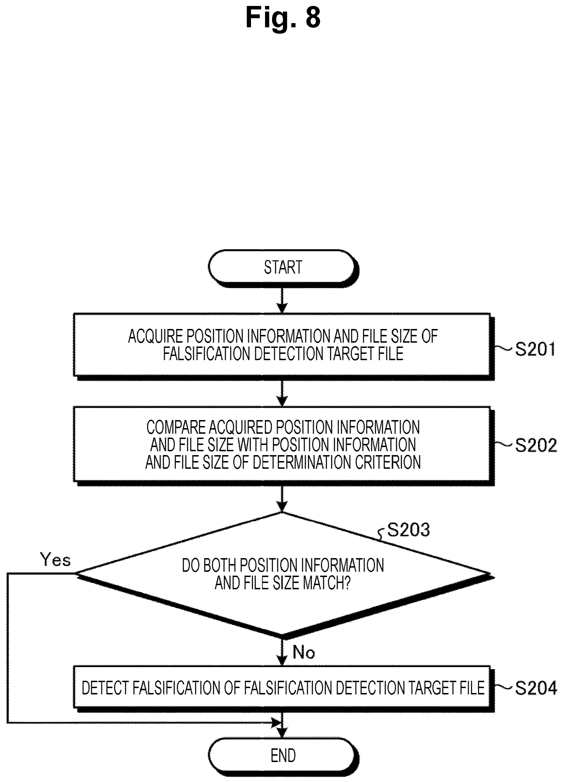

[Processing Procedure of Detection Device] Next, an example of a processing procedure of processing executed by the detection device 10 will be described with reference to Figs. 7 and 8. Fig. 7 is a flowchart illustrating an example of a processing procedure of pre-processing. Fig. 8 is a flowchart illustrating an example of a processing procedure of detection processing.

First, a processing procedure of pre-processing will be described with reference to Fig. 7. As illustrated in Fig. 7, the acquisition unit 14a of the detection device 10 acquires the position information and the file size of the falsification detection target file (Step S101). For example, when the determination criterion is generated, the acquisition unit 14a acquires a set of a file path, a digest value of a file content, file position information, a digest value of position information, and file attribute information of the file for a falsification detection target file with from the target device.

The storage unit 14b generates a determination criterion including the position information or the file size acquired by the acquisition unit 14a (Step S102), and stores the determination criterion in the determination criterion memory unit 15a (Step S103). For example, the storage unit 14b generates a set of a file path, a digest value of a file content, file position information, a digest value of the position information, and file attribute information as a determination criterion, and stores the set in the determination criterion memory unit 15a.

Next, a processing procedure of detection processing will be described with reference to Fig. 8. As illustrated in Fig. 8, when falsification detection is performed, the acquisition unit 14a acquires position information and a file size of a falsification detection target file (Step S201).

Then, the detection unit 14c compares the position information and the file size acquired when the falsification is detected with the position information and the file size of the determination criterion saved in the determination criterion memory unit 15a (Step S202). As a result, the detection unit 14c determines whether both the position information and the file size match (Step S203).

Then, in a case where both of the position information and the file size match (Yes in Step S203), the detection unit 14c determines that there is no falsification, and ends the processing as it is. In addition, in a case where one or both of the position information and the file size do not match (No in Step S203), the detection unit 14c detects falsification of the falsification detection target file (Step S204).

[Effects of Embodiment] As described above, the detection device 10 according to the embodiment acquires the position information and the file size of the falsification detection target file, determines a change in the acquired position information or file size, and detects falsification of the falsification detection target file in a case where there is a change in the position information or the file size. As a result, the detection device 10 can accurately and quickly detect falsification of a file.

That is, since the detection device 10 detects the falsification of the file using the position information (Block number or the like) of the storage area of the file together with the file size, it is possible to quickly and accurately detect the falsification of the file.

### [System Configuration and the like]

Each component of each device illustrated according to the above embodiments is functionally conceptual and does not necessarily have to be physically configured as illustrated. That is, a specific form of distribution and integration of each device is not limited to the illustrated form, and all or a part thereof can be functionally or physically distributed and integrated in any unit according to various loads, usage conditions, and the like. Furthermore, all or any part of the processing functions performed in each device can be implemented by a CPU and a program analyzed and executed by the CPU, or can be implemented as hardware by wired logic.

Furthermore, among the processing described in the above embodiments, all or a part of the processing described as being automatically performed can be manually performed, or all or a part of the processing described as being manually performed can be automatically performed by a known method. In addition, the processing procedures, the control procedures, the specific names, and the information including various data and parameters illustrated in the above document and drawings can be arbitrarily changed unless otherwise specified.

### [Program]

In addition, it is also possible to create a program in which the processing executed by the detection device 10 described in the foregoing embodiment is described in a language which can be executed by a computer. In this case, the computer executes the program, and thus the effects similar to those of the above embodiments can be obtained. Furthermore, the program may be recorded in a computer-readable recording medium, and the program recorded in the recording medium may be read and executed by the computer to implement processing similar to that of the above embodiments.

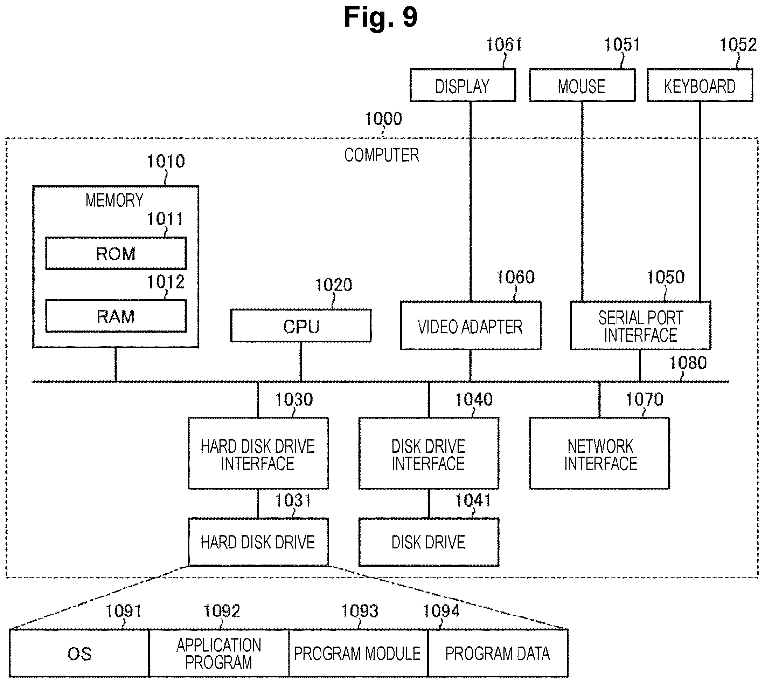

Fig. 9 is a diagram illustrating a computer that executes a program. As illustrated in Fig. 9, a computer 1000 includes, for example, a memory 1010, a CPU 1020, a hard disk drive interface 1030, a disk drive interface 1040, a serial port interface 1050, a video adapter 1060, and a network interface 1070, and these units are connected by a bus 1080.

As exemplified in Fig. 9, the memory 1010 includes a read only memory (ROM) 1011 and a RAM 1012. The ROM 1011 stores, for example, a boot program such as a basic input output system (BIOS). The hard disk drive interface 1030 is connected to a hard disk drive 1031 as illustrated in Fig. 9. The disk drive interface 1040 is connected to a disk drive 1041 as illustrated in Fig. 9. For example, a removable storage medium such as a magnetic disk or an optical disc is inserted into the disk drive 1041. As illustrated in Fig. 9, the serial port interface 1050 is connected to, for example, a mouse 1051 and a keyboard 1052. As illustrated in Fig. 9, the video adapter 1060 is connected to, for example, a display 1061.

Here, as illustrated in Fig. 9, the hard disk drive 1031 stores, for example, an OS 1091, an application program 1092, a program module 1093, and program data 1094. That is, the above program is stored as a program module in which a command executed by the computer 1000 is described, for example, in the hard disk drive 1031.

In addition, various data described in the above embodiments is stored as program data in, for example, the memory 1010 and the hard disk drive 1031. The CPU 1020 then reads the program module 1093 and the program data 1094 saved in the memory 1010 and the hard disk drive 1031 to the RAM 1012 as necessary, and executes various processing procedures.

Note that the program module 1093 and the program data 1094 related to the program are not limited to being stored in the hard disk drive 1031, and may be stored in, for example, a removable storage medium and read by the CPU 1020 via the disk drive or the like. Alternatively, the program module 1093 and the program data 1094 related to the program may be stored in another computer connected via a network (such as a local area network (LAN) or a wide area network (WAN)) and read by the CPU 1020 via the network interface 1070.

Although the embodiments to which the invention made by the present inventor is applied have been described above, the present invention is not limited by the description and the drawings which are parts of the disclosure of the embodiment of the present invention. In other words, other embodiments, examples, operational techniques, and the like made by those skilled in the art or the like on the basis of the present embodiment are all included in the scope of the present invention.

### Reference Signs List

- 10: Detection device
- 11: Communication processing unit
- 12: Input unit
- 13: Output unit
- 14: Control unit
- 14a: Acquisition unit
- 14b: Storage unit
- 14c: Detection unit
- 15: Memory unit
- 15a: Determination criterion memory unit

## Claims

1. A detection device (10) comprising:
an acquisition unit (14a) configured to acquire position information, i-node number and a file size of a falsification detection target file; and
a detection unit (14c) configured to determine a change in the position information, i-node number or the file size acquired by the acquisition unit (14a), detect falsification relating to overwrite update to the falsification detection target file when only the position information changes, detect falsification relating to additional note when the file size changes and the i-node number does not change, and detect falsification relating to file replacement when the file size and the i-node number change.

2. The detection device (10) according to claim 1, further including:
a storage unit (14b) configured to generate a determination criterion including the position information or the file size acquired by the acquisition unit (14a) and store the determination criterion in a memory unit (15), wherein
the acquisition unit (14a) acquires position information and a file size of a falsification detection target file in a case where falsification detection is performed, and
the detection unit (14c) compares the position information and the file size included in the determination criterion stored in the memory unit (15) with the position information and the file size acquired in a case where the falsification detection is performed, and in a case where any of the position information and the file size does not match, detects falsification of the falsification detection target file assuming that there is a change in the position information or the file size.

3. The detection device (10) according to claim 1, wherein
the acquisition unit (14a) acquires a digest value and a file size of position information of a falsification detection target file, and
the detection unit (14c) determines a change in the digest value of the position information or the file size acquired by the acquisition unit (14a), and detects falsification of the falsification detection target file in a case where there is a change in the digest value of the position information or the file size.

4. The detection device (10) according to claim 1, wherein the detection unit (14c) further determines, in a case where there is a change in the position information or the file size, whether there is a change in a digest value of a file content, and in a case where there is a change in the digest value of the file content, detects falsification of a falsification detection target file.

5. A detection method executed by a detection device (10) comprising:
an acquisition process of acquiring position information, i-node number and a file size of a falsification detection target file; and
a detection process of determining a change in the position information, i-node number or the file size acquired in the acquisition process, and detecting falsification relating to overwrite update to the falsification detection target file when the only position information changes, detecting falsification relating to additional note when the file size changes and the i-node number does not change, and detecting falsification relating to file replacement when the file size and the i-node number change.

6. A detection program that causes a computer (1000) to execute:
an acquisition step of acquiring position information, i-node number and a file size of a falsification detection target file; and
a detection step of determining a change in the position information, i-node number or the file size acquired in the acquisition step, and detecting falsification relating to overwrite update to the falsification detection target file when the only position information changes, detecting falsification relating to additional note when the file size changes and the i-node number does not change, and detecting falsification relating to file replacement when the file size and the i-node number change.

## Patentansprüche

1. Detektionsvorrichtung (10), umfassend:
eine Erfassungseinheit (14a), die konfiguriert ist, Positionsinformation, Inode-Nummer und eine Dateigröße einer Zieldatei der Fälschungserkennung zu erfassen; und
eine Detektionseinheit (14c), die konfiguriert ist, eine Änderung der von der Erfassungseinheit (14a) erfassten Positionsinformation, Inode-Nummer oder der Dateigröße zu bestimmen, Fälschung in Bezug auf eine Überschreibaktualisierung an der Zieldatei der Fälschungserkennung zu detektieren, wenn sich nur die Positionsinformation ändert, Fälschung in Bezug auf ein Zusatzschreiben zu detektieren, wenn sich die Dateigröße ändert und sich die Inode-Nummer nicht ändert, und Fälschung in Bezug auf eine Dateiersetzung zu detektieren, wenn sich die Dateigröße und die Inode-Nummer ändern.

2. Detektionsvorrichtung (10) nach Anspruch 1, weiter einschließend:
eine Speichereinheit (14b), die konfiguriert ist, ein Bestimmungskriterium zu erzeugen, einschließend die von der Erfassungseinheit (14a) erfasste Positionsinformation oder die Dateigröße, und das Bestimmungskriterium in einem Speicher (15) zu speichern, wobei
die Erfassungseinheit (14a) Positionsinformation und eine Dateigröße einer Zieldatei der Fälschungserkennung erfasst, in einem Fall, in dem eine Fälschungserkennung durchgeführt wird, und
die Detektionseinheit (14c) die Positionsinformation und die Dateigröße, die in dem im Speicher (15) gespeicherten Bestimmungskriterium enthalten sind, mit der Positionsinformation und der Dateigröße vergleicht, die in einem Fall, in dem die Fälschungserkennung durchgeführt wird, erfasst werden, und, in einem Fall, in dem eine der Positionsinformation und der Dateigröße nicht übereinstimmt, unter der Annahme, dass eine Änderung der Positionsinformation oder der Dateigröße vorliegt, Fälschung der Zieldatei der Fälschungserkennung detektiert.

3. Detektionsvorrichtung (10) nach Anspruch 1, wobei
die Erfassungseinheit (14a) einen Digestswert und eine Dateigröße der Positionsinformation einer Zieldatei der Fälschungserkennung erfasst, und
die Detektionseinheit (14c) eine Änderung des von der Erfassungseinheit (14a) erfassten Digestswerts der Positionsinformation oder der Dateigröße bestimmt, und in einem Fall, in dem eine Änderung des Digestswerts der Positionsinformation oder der Dateigröße vorliegt, Fälschung der Zieldatei der Fälschungserkennung detektiert.

4. Detektionsvorrichtung (10) nach Anspruch 1, wobei die Detektionseinheit (14c) weiter, in einem Fall, in dem eine Änderung der Positionsinformation oder der Dateigröße vorliegt, bestimmt, ob eine Änderung eines Digestswerts des Dateiinhalts vorliegt, und in einem Fall, in dem eine Änderung des Digestswerts des Dateiinhalts vorliegt, Fälschung einer Zieldatei der Fälschungserkennung detektiert.

5. Detektionsverfahren, das von einer Detektionsvorrichtung (10) ausgeführt wird, umfassend:
einen Erfassungsvorgang zum Erfassen von Positionsinformation, Inode-Nummer und einer Dateigröße einer Zieldatei der Fälschungserkennung; und
einen Detektionsvorgang des Bestimmens einer Änderung der im Erfassungsvorgang erfassten Positionsinformation, Inode-Nummer oder der Dateigröße, und des Detektierens von Fälschung in Bezug auf eine Überschreibaktualisierung an der Zieldatei der Fälschungserkennung, wenn sich nur die Positionsinformation ändert, des Detektierens von Fälschung in Bezug auf ein Zusatzschreiben, wenn sich die Dateigröße ändert und sich die Inode-Nummer nicht ändert, und des Detektierens von Fälschung in Bezug auf eine Dateiersetzung, wenn sich die Dateigröße und die Inode-Nummer ändern.

6. Detektionsprogramm, das einen Computer (1000) veranlasst, Folgendes auszuführen:
einen Erfassungsschritt zum Erfassen von Positionsinformation, Inode-Nummer und einer Dateigröße einer Zieldatei der Fälschungserkennung; und
einen Detektionsschritt des Bestimmens einer Änderung der im Erfassungsschritt erfassten Positionsinformation, Inode-Nummer oder der Dateigröße, und des Detektierens von Fälschung in Bezug auf eine Überschreibaktualisierung an der Zieldatei der Fälschungserkennung, wenn sich nur die Positionsinformation ändert, des Detektierens von Fälschung in Bezug auf ein Zusatzschreiben, wenn sich die Dateigröße ändert und sich die Inode-Nummer nicht ändert, und des Detektierens von Fälschung in Bezug auf eine Dateiersetzung, wenn sich die Dateigröße und die Inode-Nummer ändern.

## Revendications

1. Dispositif de détection (10) comprenant :
une unité d'acquisition (14a) configurée pour acquérir des informations de position, un numéro de nœud d'index et une taille de fichier d'un fichier cible de détection de falsification ; et
une unité de détection (14c) configurée pour déterminer un changement dans les informations de position, le numéro de nœud d'index ou la taille de fichier acquis par l'unité d'acquisition (14a), détecter une falsification relative à une mise à jour par écrasement du fichier cible de détection de falsification lorsque seules les informations de position changent, détecter une falsification relative à une note supplémentaire lorsque la taille de fichier change et que le numéro de nœud d'index ne change pas, et détecter une falsification relative à un remplacement de fichier lorsque la taille de fichier et le numéro de nœud d'index changent.

2. Dispositif de détection (10) selon la revendication 1, incluant en outre :
une unité de stockage (14b) configurée pour générer un critère de détermination incluant les informations de position ou la taille de fichier acquises par l'unité d'acquisition (14a) et stocker le critère de détermination dans une unité de mémoire (15), dans lequel
l'unité d'acquisition (14a) acquiert des informations de position et une taille de fichier d'un fichier cible de détection de falsification dans un cas où la détection de falsification est mise en œuvre, et
l'unité de détection (14c) compare les informations de position et la taille de fichier incluses dans le critère de détermination stocké dans l'unité de mémoire (15) avec les informations de position et la taille de fichier acquises dans un cas où la détection de falsification est mise en œuvre, et dans un cas où un élément quelconque parmi les informations de position et la taille de fichier ne correspond pas, détecte une falsification du fichier cible de détection de falsification en supposant qu'il y a un changement dans les informations de position ou la taille de fichier.

3. Dispositif de détection (10) selon la revendication 1, dans lequel
l'unité d'acquisition (14a) acquiert une valeur de hachage et une taille de fichier des informations de position d'un fichier cible de détection de falsification, et
l'unité de détection (14c) détermine un changement dans la valeur de hachage des informations de position ou la taille de fichier acquise par l'unité d'acquisition (14a), et détecte une falsification du fichier cible de détection de falsification dans un cas où il y a un changement dans la valeur de hachage des informations de position ou la taille de fichier.

4. Dispositif de détection (10) selon la revendication 1, dans lequel l'unité de détection (14c) détermine en outre, dans un cas où il y a un changement dans les informations de position ou la taille de fichier, s'il y a un changement dans une valeur de hachage d'un contenu de fichier, et dans un cas où il y a un changement dans la valeur de hachage du contenu de fichier, détecte une falsification d'un fichier cible de détection de falsification.

5. Procédé de détection exécuté par un dispositif de détection (10) comprenant :
une étape d'acquisition consistant à acquérir des informations de position, un numéro de nœud d'index et une taille de fichier d'un fichier cible de détection de falsification ; et
une étape de détection consistant à déterminer un changement dans les informations de position, le numéro de nœud d'index ou la taille de fichier acquis dans l'étape d'acquisition, et à détecter une falsification relative à une mise à jour par écrasement du fichier cible de détection de falsification lorsque seules les informations de position changent, détecter une falsification relative à une note supplémentaire lorsque la taille de fichier change et que le numéro de nœud d'index ne change pas, et détecter une falsification relative à un remplacement de fichier lorsque la taille de fichier et le numéro de nœud d'index changent.

6. Programme de détection qui amène un ordinateur (1000) à exécuter :
une étape d'acquisition consistant à acquérir des informations de position, un numéro de nœud d'index et une taille de fichier d'un fichier cible de détection de falsification ; et
une étape de détection consistant à déterminer un changement dans les informations de position, le numéro de nœud d'index ou la taille de fichier acquis dans l'étape d'acquisition, et à détecter une falsification relative à une mise à jour par écrasement du fichier cible de détection de falsification lorsque seules les informations de position changent, détecter une falsification relative à une note supplémentaire lorsque la taille de fichier change et que le numéro de nœud d'index ne change pas, et détecter une falsification relative à un remplacement de fichier lorsque la taille de fichier et le numéro de nœud d'index changent.
